**Europäisches Patentamt**

**European Patent Office**

**Office européen des brevets**

(11) Numéro de publication: **0 161 450**
**B1**

(12) **FASCICULE DE BREVET EUROPEEN**

(19)

(45) Date de publication du fascicule du brevet:
**17.11.88**

(21) Numéro de dépôt: **85103930.5**

(22) Date de dépôt: **02.04.85**

(51) Int. Cl.⁴: **H 01 M 6/44,** H 01 M 2/10

(54) **Montage pour au moins un empilage de piles ou de batteries de piles.**

(30) Priorité: **05.04.84 FR 8405375**

(43) Date de publication de la demande:
**21.11.85 Bulletin 85/47**

(45) Mention de la délivrance du brevet:
**17.11.88 Bulletin 88/46**

(84) Etats contractants désignés:
**AT BE CH DE FR GB IT LI LU NL SE**

(56) Documents cités:
**FR - A - 2 251 919**
**FR - A - 2 488 050**
**US - A - 2 886 623**
**US - A - 3 784 411**
**US - A - 3 986 894**

(73) Titulaire: **Société Anonyme dite SAFT, 156, avenue de Metz, F-93230 Romainville (FR)**

(72) Inventeur: **Arzur, Jean-Paul, 25, rue Edouard Grimaux, F-86000 Poitiers (FR)**
Inventeur: **Joyeux, François, 73, rue de Gué Soudeau, F-86360 Chasseneuil du Poitou (FR)**

(74) Mandataire: **Weinmiller, Jürgen et al, Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

### Description

La présente invention concerne un empilage de piles ou de batteries de piles, dont chaque pile comporte un godet fermé par une couvercle avec un joint plastique interposé, l'empilage comportant des armatures sur toute sa hauteur et étant inséré dans un tube d'où émergent deux bornes de polarités opposées, les vides étant comblés par une compound.

Le document US-A 3 986 894 montre un empilage de piles qui est inséré dans un tube d'où émergent deux bornes de polarité opposée. Les vides entre les piles et le tube sont comblés par un compound durcissable.

Le fonctionnement normal de tels empilages est limité en température par la structure même de leur joint plastique. A basse température, de l'ordre de −20°C, celui-ci peut devenir cassant ou présenter des caractéristiques de dilatation mal accordées avec les parties métalliques de la fermeture; à haute température, de l'ordre de +90°C, il y a phénomène de fluage. Dans ces cas extrêmes, l'étanchéité des piles n'est pas assurée et les performances sont limitées, voire nulles.

Afin d'améliorer la résistance mécanique de tels empilages, on les entoure d'armatures sur toute leur hauteur, on inséré l'ensemble obtenu dans un tube d'où émergent deux bornes de polarités opposées, et on comble les vides par la coulée d'un compound.

Malgré toutes ces précautions on peut constater des problèmes d'étanchéité au niveau de l'élément supérieur extrème de l'empilage.

La présente invention a pour but d'éviter ces inconvénients et d'augmenter considérablement la gamme de température de fonctionnement des piles.

Ce but est atteint selon l'invetion par l'empilage tel qu'il est décrit dans la revendication 1.

Selon un mode de réalisation particulièrement avantageux, ladite pièce de maintien est constituée d'un godet, ce godet étant également totalement noyé dans ledit compound.

L'invention va être décrite à l'aide d'exemples de réalisation illustrés par les figures annexées, dans lesquelles:

- la figure 1 est une vue en élévation et en coupe partielle d'un montage de piles de l'invention,
- la figure 2 est une vue en élévation simplifiée du montage de piles de la figure 1,
- la figure 3 est une vue de dessus du montage de la figure 2, selon la coupe III–III,
- la figure 4 est une vue en élévation et en coupe partielle d'un montage de groupes de trois piles de l'invention,
- la figure 5 est une vue de dessus du montage de la figure 4 selon la coupe V–V,
- la figure 6 est une vue en élévation d'une partie de la figure 4,
- la figure 7 est une vue de dessus d'un montage de quatre piles de l'invention.

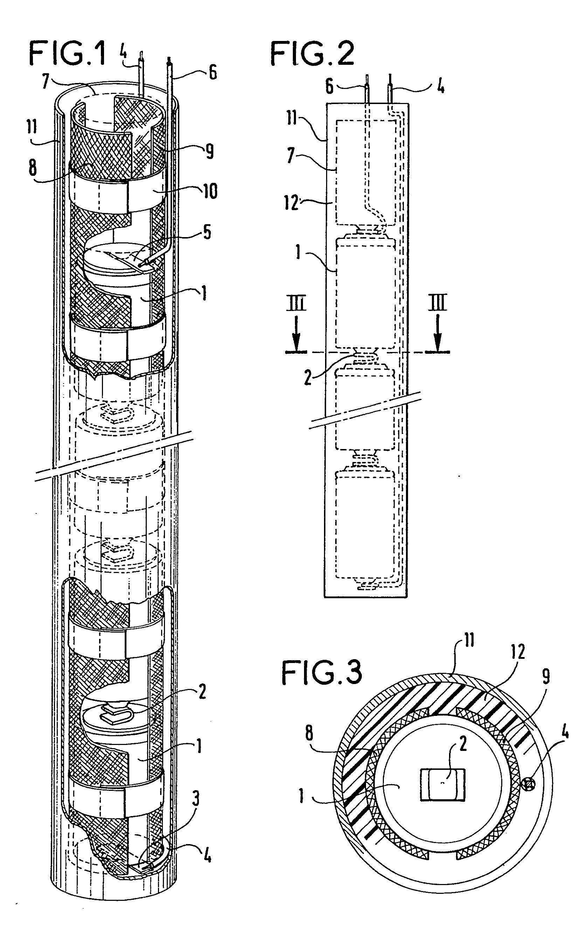

Les figures 1, 2 et 3 représentent un montage de piles, constitué par un empilage classique de piles 1 telles que des piles au lithium par exemple, dont la fermeture est du type à sertissage avec joint plastique, reliées entre elles par une pièce de contact 2 en forme de C; à la partie inférieure de l'empilage des piles une lame de contact 3 est reliée à un fil 4, et à la partie supérieure de l'empilage de piles une lame de contact 5 est reliée à un fil 6; les piles étant montées en série par l'intermédiaire des pièces de contact 2, les fils 4 et 6 sont donc reliées aux polarités positive et négative de l'empilage. Conformément à l'invention la pile supérieure de l'empilage est surmontée d'une pièce de maintien 7, et deux armatures 8 et 9, en fibres de verre, sont disposées contre les piles 1 et la pièce de maintien 7, sur toute la hauteur de l'empilage; les armatures sont par exemple des bandes de fibres de verre maintenues en place par des bandes de maintien 10 qui facilitent la manipulation de l'empilage et son montage dans un tube 11 en verre époxy ou métallique; les bandes de maintien sont par exemple un ruban adhésif. Après montage dans le tube, celui-ci est rempli d'un compound 12 thermodurcissable, ce compound enrobant ainsi complètement l'empilage constitué par les piles 1, la pièce de maintien 7, et les armatures 8 et 9.

La figure 1 représente en élévation et coupe partielle l'empilage dans le tube 11, avant enrobage; la figure 2 est une vue schématique en élévation du montage de la figure 1 après enrobage, et la figure 3 est une vue de dessus d'une coupe III–III de la figure 2; le compound 12 est représenté figures 2 et 3.

Dans l'empilage de piles, celles-ci sont soumises à des variations de température qui provoquent des contraintes dues aux dilatations ainsi qu'aux effets de la pression interne engendrée par la température à l'intérieur des piles. Dans l'empilage selon l'invention, la pile supérieure a la pièce de maintien 7 en regard de son couvercle, et les autres piles de l'empilage ont toutes le fond métallique d'un godet en regard de leur couvercle, ce qui contribue pour toutes les piles à la même consolidation de l'enrobage au voisinage de leur fermeture. La pièce de maintien 7 a une forme approchante de celle d'une pile et son matériau est compatible avec le compound d'enrobage et les diverses contraintes extérieures; la pièce de maintien 7 peut être simplement constituée par le godet d'une pile; bien évidemment ce godet est rempli de compound lors de l'opération d'enrobage.

Le compound enrobant complètement les piles assure l'étanchéité de celles-ci lorsque les températures extrêmes d'utilisation des piles sont dépassées, ces températures extrêmes étant déterminées par la tenue du joint plastique utilisé pour la fermeture des piles. Bien entendu le compound doit avoir une excellente tenue climatique dans une plage de température recouvrant celles des joints plastiques. Le compound sera par exemple du type époxy ou polyuréthane chargé en silice, dont la gamme d'utilisation s'étend de −55°C à +250°C.

Le compound doit également avoir de bonnes qualités d'adhérence et de fluidité avant durcissement afin de parfaire l'étanchéité des piles et assurer leur étanchéité aux températures pour lesquelles cette étanchéité n'est plus assurée par le joint plastique.

Les compounds d'enrobage couramment utilisés possèdent des caractéristiques de tenue mécanique faibles. Le sens des contraintes de dilatations et de pression prépondérantes des piles sous l'effet de la température étant dirigé selon l'axe des piles, donc de l'empilage, le compound sous l'action de ces contraintes peut se fissurer et ne plus assurer sa fonction d'étanchéité. Pour pallier ce défaut, on associe au compound d'enrobage des armatures en fibres de verre placées dans le sens des contraintes, donc parallèlement à l'axe des piles, sur toute la hauteur de l'empilage constitué par les piles 1 et la pièce de maintien 7.

Les figures 1, 2, 3 sont relatives à un empilage de piles dont chaque étage est constitué par une seule pile. Lorsque l'on désire augmenter la puissance délivrée par un ensemble de piles, il est bien connu d'associer en parallèle plusieurs piles entre elles à chaque étage d'un empilage, chaque étage étant ainsi constitué par une batterie de piles.

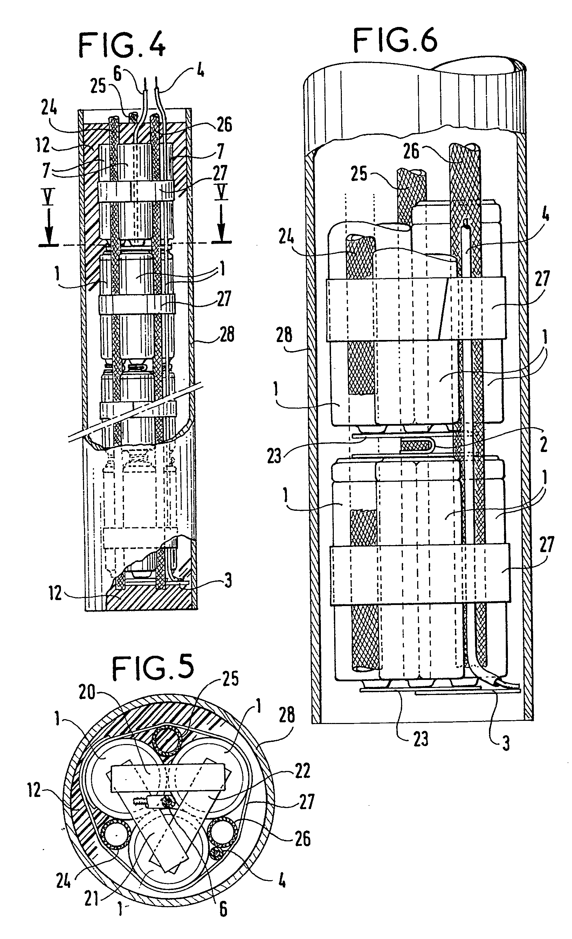

Les figures 4, 5, 6 sont relatives à un empilage de batteries de piles au lithium, chaque batterie étant constituée par trois piles 1 en parallèle. La figure 4 est une vue en élévation et coupe partielle d'un empilage, dans laquelle le compound d'enrobage n'est représenté qu'aux extrémités inférieure et supérieure de l'empilage, pour plus de clarté de la figure; la figure 6 est une vue en élévation, avec coupe du tube, de la partie inférieure de l'empilage de la figure 4, avant enrobage; la figure 5 est une vue de dessus selon la coupe V–V de la figure 4. Dans chaque batterie de trois piles les polarités négatives des piles 1 sont réunies entre elles par des lames de jonction 20, 21, 22 visibles sur la figure 5, et les polarités positives des piles sont également réunies entre elles par des lames de jonction telles que 23, comme cela est visible sur la figure 6. Deux batteries de piles successives sont réunies entre elles par une pièce de contact 2, en forme de C (figure 6). La batterie de piles supérieure de l'empilage est surmontée d'un ensemble de trois pièces de maintien 7. Trois aramatures de fibres de verre 24, 25, 26 sont placées longitudinalement, contre les piles 1 et les pièces de maintien 7, sur toute la hauteur de l'empilage, et maintenues au niveau de chaque batterie de trois piles et de l'ensemble de pièces d'extrémité par des bandes de maintien 27. Les armatures 24, 25, 26 sont par exemple des gaines de fibres de verre. Comme dans l'exemple prédédent illustré par les figures 1, 2, 3, les bandes de maintien assurent une certaine rigidité de l'empilage qui facilite sa manipulation et sa mise en place dans un tube 28, en époxy ou métallique. Après mise en place de l'empilage dans le tube 28, l'ensemble est enrobé par le compound.

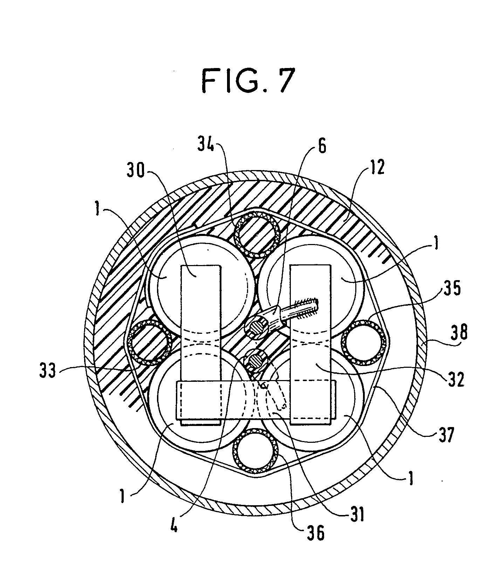

La figure 7 représente en coupe, un empilage constitué de batteries de quatre piles au lithium, cette coupe étant effectuée entre la batterie supérieure de l'empilage et l'ensemble de pièces de maintien qui la surmonte; cette figure est donc comparable à la figure 5. Chaque batterie de piles est constituée par quatre piles 1 en parallèle, les polarités négatives des quatre piles sont réunies entre elles par des lames de jonction 30, 31, 32; les polarités positives sont également réunies entre elles. Le fil 4 est relié à la polarité positive et le fil 6 est relié à la polarité négative de l'empilage de batteries de piles. Quatre gaines 33, 34, 35, 36, en fibre de verre sont disposées autour de l'empilage et sur toute sa hauteur, y compris les quatre pièces de maintien qui surmontent la batterie de piles supérieure; des bandes de maintien 37, en ruban adhésif, assurent, au niveau de chaque batterie de piles et de l'ensemble des pièces de maintien, la fixation des gaines et des piles, ou des pièces de maintien entre elles. L'ensemble est contenu dans un tube 38 et enrobé par un compound 12 représenté partiellement à la figure 7 pour plus de clarté.

Bien entendu dans un empilage de batteries de piles, chaque batterie peut être constituée par un nombre de piles supérieur à quatre, l'ensemble des pièces de maintien surmontant la batterie de piles supérieure comportant alors autant de pièces de maintien qu'il y a de piles dans une batterie; de même, le nombre des gaines réparties autour de l'empilage peut être supérieur a quatre.

**Revendications**

1. Empilage de piles ou batteries de piles, dont chaque pile comporte un godet fermé par un couvercle avec un joint plastique interposé, l'empilage comportant sur toute sa hauteur des armatures entourant les piles ou les batteries de piles et étant inséré dans un tube d'où émergent deux bornes de polarités opposées reliées aux piles extrêmes ou aux batteries de piles extrêmes de l'empilage, les vides étant comblés par un compound, caractérisé par le fait que chaque couvercle de la ou les pile(s) extrême(s) supérieure(s) dudit empilage est surmonté d'une pièce de maintien (7) ayant en regard de ce couvercle sensiblement la même forme que le fond du godet d'une pile intermédiaire de l'empilage.

2. Empilage selon la revendication 1, caractérisé par le fait que chaque pièce de maintien (7) est un godet constituant dans la fabrication d'une pile une électrode de ladite pile, ledit godet étant également noyé dans ledit compound.

3. Empilage selon la revendication 1, caractérisé par le fait que les armatures sont des gaines (24, 25, 26) de fibres de verre, lesdites fibres étant orientées parallèlement à l'axe des piles.

4. Empilage selon la revendication 1, caractérisé par le fait que le compound d'enrobage a une plage de température d'utilisation comprise entre −55°C et +250°C.

**Patentansprüche**

1. Stapel von galvanischen Zellen oder Batterien, wobei jede Zelle einen durch einen Deckel verschlossenen Becher mit zwischen Becher und Deckel eingefügter Kunststoffdichtung besitzt und der Stapel über seine gesamte Höhe Verstärkungsstrukturen aufweist, welche die Zellen oder die Batterien von Zellen umgeben, und wobei der Stapel in ein Rohr eingefügt ist, aus dem zwei Anschlussklemmen mit entgegengesetzter Polarität herausragen, die mit den äusseren Zellen oder Batterien von Zellen des Stapels verbunden sind, wobei die Hohlräume mit einer Verbundmasse ausgefüllt sind, dadurch gekennzeichnet, dass jeder Deckel der äussersten, obersten Zelle(n) des Stapels von einem Halteelement (7) überragt wird, welches dem Deckel gegenüber im wesentlichen die gleiche Form wie der Boden des Bechers einer Zelle im Inneren des Stapels besitzt.

2. Stapel nach Anspruch 1, dadurch gekennzeichnet, dass jedes Halteelement (7) ein Becher ist, welcher bei der Herstellung einer Zelle die Elektrode der Zelle bildet, wobei der Becher ebenfalls in der Verbundmasse völlig eingebettet ist.

3. Stapel nach Anspruch 1, dadurch gekennzeichnet, dass die Verstärkungsstrukturen Hüllen (24, 25, 26) aus Glasfasern sind, wobei die Fasern parallel zur Achse der Zellen orientiert sind.

4. Stapel nach Anspruch 1, dadurch gekennzeichnet, dass die Einbettungsverbundmasse einen nutzbaren Temperaturbereich von −25°C bis +250°C besitzt.

**Claims**

1. A stack of cells or batteries, in which each cell comprises a cup closed by a cap with a plastic seal interposed, in which the stack includes, disposed over its entire height, reinforcing members surrounding the cells or the batteries of cells, and is inserted in a tube, from which project two terminals of opposite polarity connected to the cells or batteries of cells at the ends of the stack, and wherein the voids are filled with a compound, characterized in that each cap of the uppermost cell or cells at the end or ends of the stack is topped by a holder member (7) wich has, facing the cap, substantially the same shape, as the bottom of the cup of an intermediate cell in the stack.

2. A stack according to claim 1, characterized in that each holder member (7) is a cup which constitutes in the manufacture of a cell an electrode of said cell, and that the cup is also submerged in the compound.

3. A stack according to claim 1, characterized in that the reinforcing members are sheaths (24, 25, 26) made of glass fibers, said fibers extending parallelly to the axis of the cells.

4. A stack according to claim 1, characterized in that the embedding compound presents a usable temperature range comprised between −55°C and +250°C.

FIG.1

FIG.2

FIG.3

0 161 450

FIG.4

FIG.6

FIG.5

7

# FIG. 7